# FASCICULE DE BREVET EUROPEEN

(11) **EP 0 402 234 B1**
(45) Date de publication et mention de la délivrance du brevet: **14.04.1993**
(21) Numéro de dépôt: 90401514.6
(22) Date de dépôt: 05.06.1990
(51) Int. Cl.: F01D 25/28

(54) **Système de verrouillage provisoire de positionnement d'aubes à calage variable pendant le montage et turbomachine le comportant**
Behelfszusammenbauvorrichtung für die Einstellung von verstellbaren Turbomaschinenleitschaufeln
Temporary locking system for the positioning of turbomachine variable vanes during assembly

(30) Priorité: 07.06.1989 FR 8907515
(43) Date de publication de la demande: 12.12.1990
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Catte, Philippe Patrick, F-94430 Chennevieres (FR); Naudet, Jacky, Bondoufle, F-91000 Evry (FR)
(74) Mandataire: Moinat, François

(56) Documents cités:
- US-A- 3 558 237
- US-A- 4 363 600
- US-A- 4 498 790

## Description

La présente invention concerne le montage des compresseurs de turbomachines, plus particulièrement celles dont le carter est coiffé d'un carter constitué de demi-coquilles.

Il est classique de rencontrer des compresseurs de ce type dans lesquels une virole amont du carter formée de deux demi-anneaux est assemblée sur une virole aval elle-même formée de deux demi-anneaux.

Dans les compresseurs modernes de taille réduite mais avec un fort taux de compression, il peut arriver qu'un étage de stator soit situé au niveau du plan de joint séparant la virole amont de la virole aval. Ainsi un étage de stator peut être porté par la virole aval et avoir le bord d'attaque de ses aubes qui dépasse sous la virole amont, ou inversement être porté par la virole amont et avoir le bord de fuite de ses aubes dépassant sous la virole aval. Dans ce cas il est difficile voire impossible de démonter radialement les demi-viroles de carter qui portent de tels étages de stator.

Il est un cas où il est possible de monter et de démonter de telles viroles : c'est celui où l'étage de stator disposé "à cheval" sur le plan de joint entre virole amont et virole aval est un étage de stator à calage variable car il est alors possible d'orienter, pendant le montage ou le démontage, les aubes suivant un angle permettant aux bords d'attaque (ou de fuite) de ne plus se trouver sous la virole amont (ou aval) adjacente à celle qui les porte.

La présente invention a donc pour but de réaliser un dispositif automatique de calage des aubes dans une position permettant les opérations de montage et de démontage des viroles du carter.

L'invention a donc pour objet un système de verrouillage provisoire du positionnement angulaire d'aubes à calage variable entraînées par un anneau de commande et disposées dans la zone de liaison entre une virole de carter amont et une virole de carter aval, lesdites aubes étant positionnées près du bord avant de la virole aval de telle sorte qu'en fonctionnement leur bord d'attaque dépasse sous la virole amont.

Bien que l'invention soit ici décrite et revendiquée dans le cas où c'est le bord d'attaque des aubes qui dépasse sous la virole amont, il est bien évident que l'invention s'étend et s'applique au cas où c'est le bord des aubes qui dépasse sous une virole de carter aval (De même qu'à autre chose qu'une aube : par exemple, bras de carter orientable commandé par système anneau équivalent). La transposition du dispositif se fera en montant en sens inverse les moyens de l'invention ainsi qu'on le verra plus loin.

Dans le cas revendiqué plus expressément où les bords d'attaque dépassent sous la virole amont, le système de verrouillage provisoire de positionnement des aubes est caractérisé selon l'invention en ce qu'il comporte au moins un verrou prisonnier entraîné en translation longitudinale par au moins une des vis de fixation de la virole aval sur la virole amont, ledit verrou comportant des ailes aval aptes à s'engager dans des encoches de l'anneau de commande pendant le dévissage de ladite vis pour maintenir ledit anneau dans une position où les aubes ont une orientation telle que leur bord d'attaque soit dégagé de la zone de la virole amont.

Pour ce faire, le verrou est constitué d'une tôle repliée comportant d'une part à l'amont une patte transversale munie d'une découpe dans laquelle vient se loger la vis de fixation de la virole, d'autre part une patte d'entrainement centrale apte à être entraînée vers l'aval par la tête de la vis lors de son dévissage et deux ailes axiales aval d'engagement dans les encoches de l'anneau de commande.

L'invention a également pour objet un turboréacteur comportant un étage de stator à calage variable placé dans la zone de raccordement entre une virole de carter amont et une virole de carter aval, qui comporte au moins un système de verrouillage selon l'invention ici décrite, ledit verrou étant porté par une des vis de fixation des deux viroles, ladite vis étant engagée dans la découpe de la patte transversale amont de verrou et ayant sa tête maintenue prisonnière entre ladite patte amont et la patte centrale du verrou.

D'autre caractéristique et le mode de réalisation préférentiel de l'invention seront précisés dans la description qui va suivre, accompagnée de planches de dessins parmi lesquelles :
- la figure 1 est une vue en 1/2 coupe longitudinale selon le plan II de la figure 5 d'un étage de stator de compresseur incorporant l'invention, le dispositif de l'invention étant déverrouillé ;
- la figure 2 est une vue en perspective du verrou utilisé dans le dispositif selon l'invention ; tandis que la figure 2a est une vue de la tôle emboutie et découpée avant pliage pour former le verrou ;
- la figure 3 est une vue similaire à la figure 1, selon le plan III-III de la figure 5, verrou engagé dans l'anneau de commande pendant le démontage de la virole aval.
- la figure 4 est une vue de dessus de la figure 3.
- la figure 5 est une vue de dessus d'un carter de turbomachine dont la virole aval comporte un dispositif de verrouillage provisoire selon l'invention.

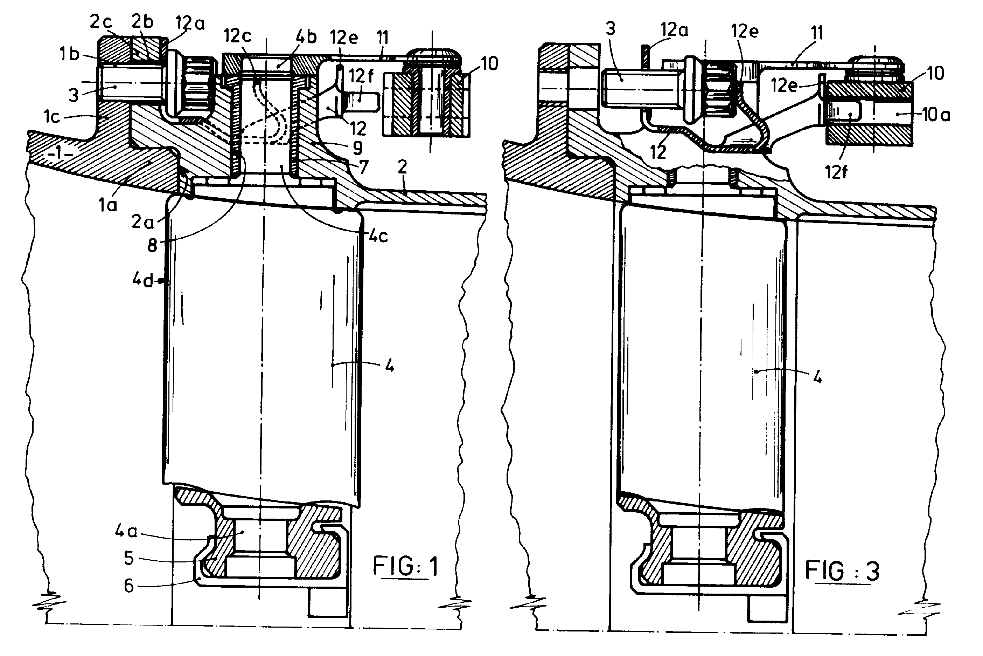

Sur la figure 1, on voit que le carter de compresseur comporte une demi-virole amont 1 et une demi-virole aval 2. La demi-virole amont comporte un bord arrière 1a qui vient s'engager dans une partie circulaire creuse 2a de la virole aval, afin d'assurer la circularité du montage. Les deux viroles sont assemblées entre elles par des vis 3 engagées dans des perçages 2b de la bride 2C de la virole aval et vissées dans des taraudages 1b de la bride 1c de la virole amont.

La première rangée d'aubes portées par la virole aval est un étage d'aubes 4 de stator à calage variable dont le pied 4a tourillonne dans une douille 5 d'un anneau interne 6 tandis qu'en tête l'axe de commande 4b de l'aube comporte une portée cylindrique 4c tourillonnant dans une douille 7 disposée dans l'alésage 8 d'un bossage 9 externe où la demi-virole aval 2.

La rotation de l'aube est commandée par un anneau de commande 10 relié aux aubes de l'étage de stator par des biellettes de manoeuvre 11.

Les vis 3 d'assemblage des viroles 1 et 2 sont disposées entre les bossages 9 dans lesquels tourillonnent les aubes 4.

Sur la figure , on voit que l'aube 4, en fonctionnement a son bord d'attaque 4d qui dépasse sous le bord arrière 1a de la virole amont car l'étage de stator est disposé très près du bord de la virole aval 2. Ainsi lors du montage et du démontage les aubes 4 doivent être temporairement calées dans une position où leur bord d'attaque aura tourné suffisamment pour être dégagé de la virole amont enfin que les bords d'attaque 4d ne soient pas cognés et ébréchés sur l'intérieur de la virole amont 1 lorsque on extrait la demi-coquille aval 2.

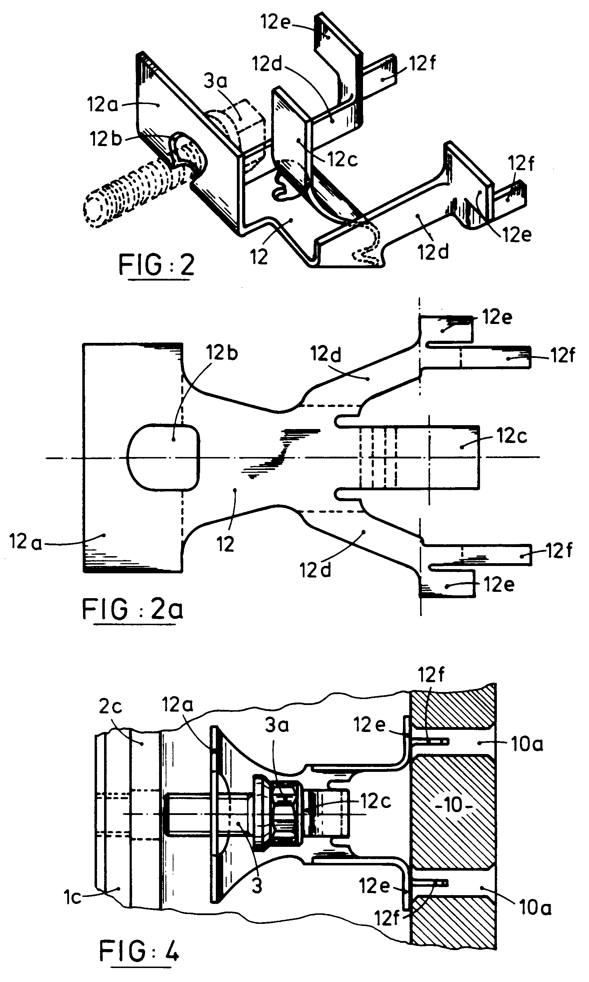

Pour assurer ce calage provisoire, un verrou 12 est disposé sur au moins une des vis 3 d'assemblage des viroles. Ce verrou sera décrit en regard des figures 2 et 2a.

La figure 2a est une vue de la tôle emboutie, à plat, dans le pliage réalisera le verrou 12. Sur cette vue, les traits interrompus de même longueur montrent un pliage de la tôle vers le haut et les interrompus mixtes désignent un pliage de la tôle vers le bas.

Le verrou 12 est constitué par une tôle emboutie dont la partie amont 12a est repliée transversalement vers le haut et comporte une découpe 12b suffisante pour le passage du filetage d'une des vis d'assemblage 3.

La partie centrale arrière 12c de la tôle 12 est transversalement repliée vers le haut parallèlement à la patte transversale amont pour former une patte centrale d'entraînement. Le verrou comporte également deux bords latéraux 12d longitudinaux également repliés vers le haut dont les extrémités aval sont séparées en deux parties, l'une supérieure 12e pliée transversalement vers l'extérieur pour former une butée transversale aval apte à venir en butée contre l'anneau de commande 10 de l'étage de stator, et l'autre inférieure 12f repliée longitudinalement pour former deux ailes aval axiales aptes à s'engager dans deux encoches 10a de l'anneau 10 dans leur position de verrouillage.

Pour la mise en oeuvre du verrou ainsi décrit (voir figures 3 et 4), on positionne l'anneau de commande 10 de telle sorte que les aubes soient calées dans une position où les aubes sont tournées afin que leur bord d'attaque ne dépasse pas de la virole 2 on positionne ensuite le verrou de telle sorte que ses ailes aval 12f soient engagées dans les encoches 10a de l'anneau et que ses butées aval 12e soient en appui contre l'anneau 10. Une des vis d'assemblage 3 est alors glissée dans la découpe 12b du verrou de telle sorte que la tête 3a de la vis soient emprisonnée entre la patte transversale amont 12a et la patte d'entraînement centrale 12c.

La vis 3 est alors vissée dans la bride 1. Tant que le vissage n'est pas terminé les ailes axiales 12f du verrou maintiennent l'anneau de commande 10 dans une position où les aubes sont effacées. Dès que la vis arrive à fond de vissage, les ailes 12f sont dégagées des encoches 10a de l'anneau et celui-ci est libéré de façon à pouvoir fonctionner normalement.

Le démontage de la virole aval s'effectue dans l'ordre inverse. On positionne l'anneau 10 de sorte que ses encoches 10a soient en face des ailes 12f du verrou. Les aubes sont ainsi masquées et le dévissage peut être effectué.

Le verrou a une longueur totale telle que, tant que les ailes aval 12f ne sont pas engagées dans les encoches de l'anneau, la vis de fixation ne puisse être extraite de la bride de la virole qui la porte.

Pendant le devissage la tête de vis 3a pousse la patte d'entrainement 12c, et par là même le verrou tout entier vers l'aval et les ailes 12f s'engagent dans les encoches 10a de l'anneau, maintenant celui-ci en position verrouillée pendant tout le démontage.

Lorsque la vis est complètement dévissée, les butées 12e sont en appui contre l'anneau et, la vis 3 étant sortie de la bride 1c de la virole amont, la virole aval 2 peut être sortie de son emplacement.

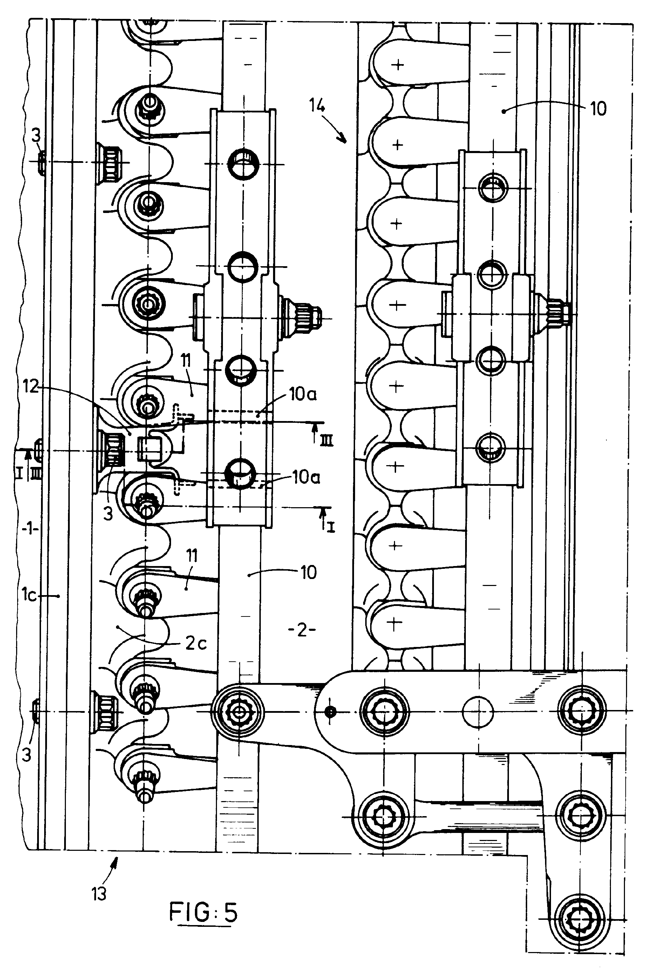

A la figure 5, on a représenté une vue de dessus du carter de compresseur incorporant l'invention. La virole aval 2 supporte deux étages de stator à calage variable 13,14 manoeuvrée par des anneaux de commande 10.

Pour chaque demi-virole formant la virole aval 2, un seul verrou 12 agissant sur des encoches 10a de l'anneau de commande amont est suffisant pour maintenir en position de verrouillage temporaire ledit anneau et permette d'assurer un montage/démontage sans risque du carter de compresseur.

L'invention résoud donc de façon simple les problèmes de montage des coquilles de carter de compresseur des moteurs modernes dont les distances inter-étages sont réduites et évite donc tout risque d'endommagement des aubes de stator lors des opérations de maintenance.

## Revendications

1. Système de verrouillage provisoire du positionnement angulaire d'aubes (4) à calage variable entrainées par un anneau de commande (10) et disposées dans la zone de liaison entre une virole de carter amont (1) et une virole de carter aval (2), lesdites aubes étant positionnées près du bord avant de la virole aval (2) de telle sorte qu'en fonctionnement leur bord d'attaque (4d) dépassent sous la virole amont (1), système caractérisé en ce qu'il comporte au moins un verrou prisonnier (12) entraîné en translation longitudinale par au moins une des vis de fixation (3) de la virole aval (2) sur la virole amont (1), ledit verrou (12) comportant des ailes aval (12f) aptes à s'engager dans des encoches (10a) de l'anneau de commande (10) pendant le dévissage de ladite vis pour maintenir ledit anneau (10) dans une position où les aubes (4) ont une orientation telle que leur bord d'attaque (4d) soit dégagé de la zone de la virole amont (1).

2. Système de verrouillage selon la revendication 1, caractérisé en ce que le verrou (12) est constitué d'une tôle repliée comportant d'une part, à l'amont une patte transversale (12a) munie d'une découpe (12b) dans laquelle vient se loger la vis de fixation (3) de la virole, d'autre part une patte d'entrainement centrale (12c) apte à être entraînée vers l'aval par la tête (3a) de la vis (3) lors de son dévissage et deux ailes axiales aval (12f) d'engagement dans les encoches (10a) de l'anneau de commande.

3. Système de verrouillage selon la revendication 2, caractérisé en ce que la patte d'entraînement centrale (12c) est constituée par une partie centrale de la tôle repliée radialement vers le haut entre deux bords longitudinaux (12d) de la tôle, eux même repliés radialement vers le haut.

4. Système de verrouillage selon l'une des revendications 2 ou 3, caractérisé en ce que les deux ailes aval axiales (12f) sont disposées à l'extrémité aval des deux bords longitudinaux (12d) de la tôle, repliés radialement vers le haut.

5. Système de verrouillage selon l'une quelconque des revendications 1 à 4, caractérisé en ce qu'il comporte au moins une butée transversale aval (12e) apte à venir en appui contre l'anneau lorsque la vis (3) complètement dévissée à entraîné le verrou (12) dans sa position de verrouillage où les ailes aval (12f) sont engagées dans les encoches (10a de l'anneau).

6. Système de verrouillage selon l'une des revendications 1 à 5 caractérisé en ce que le verrou (12) a une longueur totale telle que, tant que les ailes aval (12f) ne sont pas engagées dans les encoches (10a) de l'anneau, la vis de fixation ne puisse être extraite de la bride de la virole qui la porte.

7. Turbomachine comportant un étage d'aubes (4) à calage variable entraînées par un anneau de commande (10) et disposées dans la zone de liaison entre une virole de carter amont (1) et une virole de carter aval (2), lesdites aubes étant positionées près du bord avant de la virole aval (2) de telle sorte qu'en fonctionnement les bords d'attaque (4d) dépassent sous la virole amont (1), caractérisée en ce qu'elle comporte au moins un système de verrouillage selon l'une quelconque des revendications 1 à 6.

## Patentansprüche

1. Vorrichtung zum provisorischen Blockieren der Winkelstellung von Schaufeln (4) mit variabler Anstellung, die von einem Antriebsring (10) mitgenommen werden und in der Verbindungszone zwischen einem stromaufwärtigen Gehäusemantel (1) und einem stromabwärtigen Gehäusemantel (2) angeordnet sind, wobei die Schaufeln in der Nähe des vorderen Randes des stromabwärtigen Gehäusemantels (2) so positioniert sind, daß ihre Vorderkanten (4d) im Betrieb unter dem stromaufwärtigen Gehäusemantel (1) vorbeilaufen,
**dadurch gekennzeichnet,**
daß die Vorrichtung wenigstens ein eingeschlossenes Riegelelement (12) aufweist, das durch wenigstens eine der Schrauben (3) zur Befestigung des stromabwärtigen Gehäusemantels (2) an dem stromaufwärtigen Gehäusemantel (1) mit einer longitudinalen Translationsbewegung beaufschlagbar ist, wobei dieses Riegelelement (12) auf seiner stromabwärtigen Seite Flügel (12f) besitzt, die während des Herausdrehens der Schraube in Einkerbungen (10a) des Antriebsrings (10) eindringen können, um diesen in einer Position zu halten, in der die Schaufeln (4) so ausgerichtet sind, daß ihre Vorderkanten (4d) aus der Zone des stromaufwärtigen Gehäusemantels (1) herausgeführt sind.

2. Blockiervorrichtung nach Anspruch 1, dadurch gekennzeichnet, daß das Riegelelement (12) aus einem gebogenen Blechteil besteht mit einerseits einer transversalen Klaue (12a) auf der stromaufwärtigen Seite mit einem Ausschnitt (12b), in dem die Schraube (3) zur Befestigung des Gehäusemantels aufgenommen wird, und andererseits einer zentralen Mitnehmerklaue (12c), die von dem Kopf (3a) der Schraube (3) beim Herausdrehen in stromabwärtiger Richtung mitgenommen wird, sowie mit zwei stromabwärtigen axialen Flügeln ( 12f) für den Eingriff in die Einkerbungen (10a) des Antriebsrings.

3. Blockiervorrichtung nach Anspruch 2, dadurch gekennzeichnet, daß die zentrale Mitnehmerklaue (12c) aus einem radial nach oben abgewinkelten zentralen Teil des Blechelements besteht, der zwischen den beiden Längsrändern (12d) angeordnet ist, die ihrerseits radial nach oben abgewinkelt sind.

4. Blockiervorrichtung nach einem der Ansprüche 2 oder 3, dadurch gekennzeichnet, daß die beiden stromabwärtigen axialen Flügel (12f) an dem stromabwärtigen Ende der beiden radial nach oben abgewinkelten Längsränder (12d) des Blechelements angeordnet sind.

5. Blockiervorrichtung nach einem der Ansprüche 1 bis 4, dadurch gekennzeichnet, daß sie wenigstens einen stromabwärts gerichteten transversalen Anschlag (12e) aufweist, der an dem Antriebsring zur Anlage kommt, wenn die vollständig herausgedrehte Schraube (3) den Riegel (12) in seine Blockierstellung geführt hat, in der die stromabwärtigen Flügel (12f) mit den Einkerbungen (10a) des Antriebsrings in Eingriff stehen.

6. Blockiervorrichtung nach einem der Ansprüche 1 bis 5, dadurch gekennzeichnet, daß der Riegel (12) eine solche Gesamtlänge hat, daß die Befestigungsschraube nicht aus dem sie tragenden Flansch herausgezogen werden kann, solange die stromabwärtigen Flügel (12f) nicht mit den Einkerbungen (10a) des Antriebsrings in Eingriff gelangt sind.

7. Turbomaschine mit einer Stufe von Schaufeln (4) mit variabler Anstellung, die von einem Antriebsring ( 10) mitgenommen werden und in der Verbindungszone zwischen einem stromaufwärtigen Gehäusemantel (1) und einem stromabwärtigen Gehäusemantel (2) angeordnet sind, wobei die Schaufeln in der Nähe des vorderen Randes des stromabwärtigen Gehäusemantels (2) so positioniert sind, daß ihre Vorderkante (4d) im Betrieb unter dem stromaufwärtigen Gehäusemantel (1) vorbeiläuft, **dadurch** **gekennzeichnet,** daß sie wenigstens eine Blockiervorrichtung nach einem der Ansprüche 1 bis 6 aufweist.

## Claims

1. System for temporarily locking the angular position of blades (4) with variable pitch driven by a control ring (10) and arranged in the linkage zone between an upstream casing hoop (1) and a downstream casing hoop (2), the said blades being positioned close to the front edge of the downstream hoop (2) so that in operation, their leading edge (4d) extends under the upstream hoop (1), system characterised in that it comprises at least one captive lock (12) translationally driven longitudinally by at least one of the fastening screws (3) of the downstream hoop (2) on the upstream hoop (1), the said lock (12) comprising downstream wings (12f) able to be engaged in notches (10a) of the control ring (10) while the said screw is being unscrewed, so as to keep the said ring (10) in a position where the blades (4) have an orientation such that their leading edge (4d) is free of the zone of the upstream hoop (1).

2. Locking system according to Claim 1, characterised in that the lock (12) consists of a folded metal sheet comprising, on the one hand, upstream, a transverse tab (12a) equipped with a cutout (12b) in which the fastening screw (3) of the hoop is housed and, on the other hand, a central drive tab (12c) able to be driven downstream by the head (3a) of the screw (3) when it is being unscrewed, and two downstream axial wings (12f) for engaging in the notches (10a) of the control ring.

3. Locking system according to Claim 2, characterised in that the central drive tab (12c) consists of a central part of the metal sheet folded radially upwards between two longitudinal edges (12d) of the metal sheet, themselves folded radially upwards.

4. Locking system according to one of Claims 2 or 3, characterised in that the two axial downstream wings (12f) are arranged at the downstream end of the two longitudinal edges (12d) of the metal sheet, folded radially upwards.

5. Locking system according to any one of Claims 1 to 4, characterised in that it comprises at least one downstream transverse stop ((12e) able to come to bear against the ring when the completely unscrewed screw (3) has driven the lock (12) into its locking position in which the downstream wings (12f) are engaged in the notches (10a) of the ring.

6. Locking system according to one of Claims 1 to 5, characterised in that the lock (12) has a total length such that, as long as the downstream wings (12f) are not engaged in the notches (10a) of the ring, the fastening screw cannot be extracted from the flange of the hoop which carries it.

7. Turbine machine comprising a blade stage (4) with variable pitch driven by a control ring (10) and arranged in the linkage zone between an upstream casing hoop (1) and a downstream casing hoop (2), the said blades being positioned close to the front edge of the downstream hoop (2) so that in operation, the leading edges (4d) extend under the upstream hoop (1), characterised in that it comprises at least one locking system according to any one of Claims 1 to 6.
